# EUROPEAN PATENT SPECIFICATION

(11) **EP 4 039 518 B1**
(45) Date of publication and mention of the grant of the patent: **04.12.2024**
(21) Application number: 21192960.9
(22) Date of filing: 25.08.2021
(51) Int. Cl.: B62M 1/18, B60K 25/10, B62K 3/00, B62J 1/08, B62K 15/00

(54) **ELECTRIC KICKBOARD INCLUDING IMPACT ABSORBING DEVICE TO SUPPORT WEIGHT OF USER STANDING UP**
ELEKTRISCHES KICKBOARD MIT STOSSDÄMPFUNGSVORRICHTUNG ZUM TRAGEN DES GEWICHTS DES STEHENDEN BENUTZERS
PLANCHE ÉLECTRIQUE COMPRENANT UN DISPOSITIF D'ABSORPTION D'IMPACT POUR SUPPORTER LE POIDS D'UN UTILISATEUR DEBOUT

(30) Priority: 09.02.2021 KR 20210018502
(43) Date of publication of application: 10.08.2022
(73) Proprietor: Amazing Sun Co., Ltd., Gyeonggi-do 15049 (KR)
(72) Inventor: HAN, Kyung Hee, Yongin-si, Suji-gu, Gyeonggi-do (KR)
(74) Representative: Zeitler Volpert Kandlbinder Patentanwälte Partnerschaft mbB

(56) References cited:
- WO-A1-2018/034642
- CN-Y- 2 510 396
- KR-B1- 101 984 169
- US-B1- 10 053 173

## Description

### BACKGROUND

The present invention relates to an electric kickboard driven by an electric motor, and more particularly, to an electric kickboard including an impact absorbing device capable of distributing a portion of a weight that is applied to a knee or a waist in a standing state.

An electric kickboard is a device including an electric motor therein to move by driving the electric motor using a battery power. A wheel is mounted to a wheel frame, and a deck is prepared on the wheel frame so that a user stands up thereon.

When the electric kickboard is driven in a state in which the user stands up on the deck, the electric kickboard may move forward while the user manipulates to change a speed or a direction thereof.

An impact applied to a human body standing on the deck is absorbed such that the wheel absorbs a portion of an impact generated while moving because the wheel is used as a cushioning material like a vehicle tire, and a separate suspension unit is installed at a portion connecting the wheel and the wheel frame to absorb an impact.

Since the electric kickboard is generally designed for one person to ride thereon, the electric kickboard has a simple structure, a light weight, and a small size. Thus, although the suspension unit is installed between the wheel and the wheel frame, a sufficient impact absorbing function may not be achieved.

Although a high functional suspension unit is installed between the wheel and the wheel frame, an impact applied to a waist or a knee of the user may not be sufficiently absorbed because of the structure of the electric kickboard, i.e., because the user inevitably stands on the electric kickboard.

Particularly, when the user stands up while riding, the impact applied to the knee or the waist may not be sufficiently absorbed due to user load variation generated during moving although the wheel or the suspension unit has an excellent absorbing capacity.

### [Related art document]

### [Patent document]

(Patent document 1) 1. Korean Patent Registration No. 10-1207997 (November 28, 2012)
(Patent document 2) 2. Korean Utility Model Application No. 20-2015-0002771 (April 29, 2015)
(Patent document 3) 3. Korean Utility Model Application No. 20-2015-0006562 (October 06, 2015)
(Patent document 4) 4. WO 2018/034642 A1 discloses a personal mobility kit. The kit includes a deck, which has two mounting holes spaced along a longitudinal axis of the deck. A plurality of wheels are supported by the deck. An occupant support includes a post alternately and removably engageable with the mounting holes. A handlebar extends away from the deck along a handlebar axis and is rotatable about the handlebar axis between a forward operating position and a rearward operating position. The interchangeability of the occupant support in the mounting holes and the adjustment of the handlebar between the forward and rearward operating positions allows for the kit to be reconfigured to a variety of configurations.
(Patent document 5) 5. KR 101 984 169 B1 describes a means of transportation with an impact absorbing device.
(Patent document 6) 6. US 10 053 173 B1 discloses a height adjusting device for a bicycle.

### SUMMARY

The present invention provides an electric kickboard protecting a knee or a waist of a user by absorbing an impact force applied to the knee or the waist of the user while riding the electric kickboard through a separately provided impact absorbing device, supporting a weight of the standing user by using a seat so that the user rides easily for a long time, and supporting the weight of the standing user by installing the impact absorbing device capable of preventing excessive shakings and vibrations generated while absorbing the impact by using a coil spring and a fluid pressure at the same time.

The present invention also provides an electric kickboard in which a power generating device is installed at one side thereof and electrically connected to a battery built therein to generate electricity by using vibrations generated while using the electric kickboard and then accumulate the generated electricity in the battery, thereby using the electricity as energy for driving the electric kickboard.

The present invention provides an electric kickboard for supporting a weight of a standing user by installing an impact absorbing device capable of sufficiently absorbing an impact when a seat is vibrated during riding by using elasticity of springs having different spring constants, and producing electricity using vertical vibrations during riding by installing a self-power generating drive at one side thereof and accumulating the produced electricity to improve an energy efficiency.

### BRIEF DESCRIPTION OF THE FIGURES

The accompanying drawings are included to provide a further understanding of the inventive concept, and are incorporated in and constitute a part of this specification. The drawings illustrate embodiments of the inventive concept and, together with the description, serve to explain principles of the inventive concept. In the drawings:
FIG. 1 is a view illustrating an electric kickboard in which an impact absorbing device is installed according to the present invention;
FIG. 2 is a view illustrating a state in which a weight of a user who steps on a deck and stands on a seat of the electric kickboard in which the impact absorbing device is installed is supported according to the present invention;
FIG. 3 is an exploded view illustrating an impact absorbing device 100 mounted to the electric kickboard in which the impact absorbing device is installed according to the present invention;
FIG. 4 is an exploded view illustrating a seat frame 120 according to the present invention;
FIG. 5 is a coupling cross-sectional view illustrating the seat frame 120 according to the present invention;

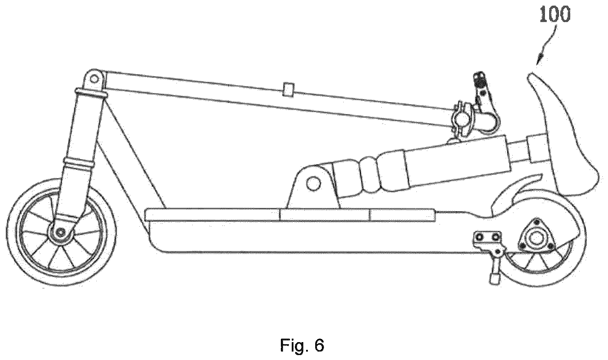

FIG. 6 is a view illustrating the electric kickboard in which the impact absorbing device is folded with respect to a hinge according to the present invention;
FIG. 7 is a view illustrating a state in which a self-power generating device is installed on a seat frame 120 of an electric kickboard according to the present invention;
FIG. 8 is a view specifically illustrating a main portion of the self-power generating device; and
FIG. 9 is a cross-sectional view illustrating a state in which the self-power generating device is installed according to the present invention.

### DETAILED DESCRIPTION

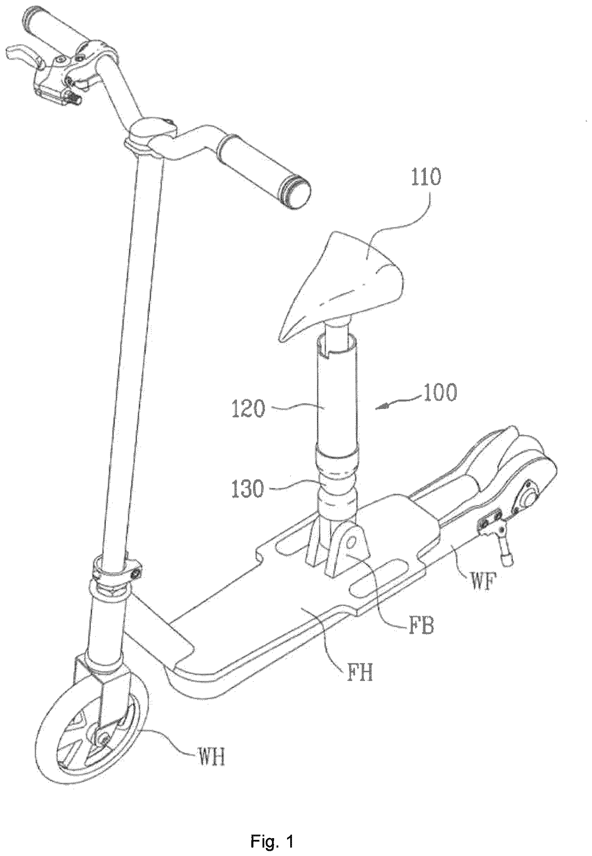

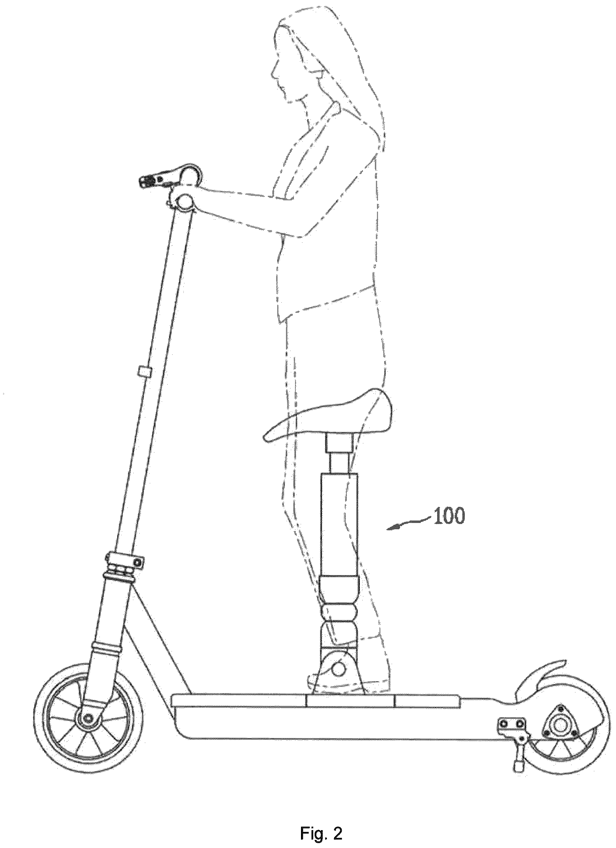

As illustrated in FIGS. 1 to 5, an electric kickboard includes a wheel frame WF in which an electrically driven wheel WH is mounted. The wheel frame WF includes a deck FH on which a user stands, and a frame bracket FB is formed on the deck.

A moving bar 130 that is bent in a radial direction when an external force is applied and then restored is formed at an upper end of the frame bracket FB. The moving bar 130 is bent within a range from 0° to 10° in a radial direction when an external force is applied and then restored again. The moving bar 130 is made of a material such as a coil spring or an elastic bar. A seat frame 120 is coupled to an upper end of the moving bar 130, and a seat 110 is coupled to an upper end of the seat frame 120.

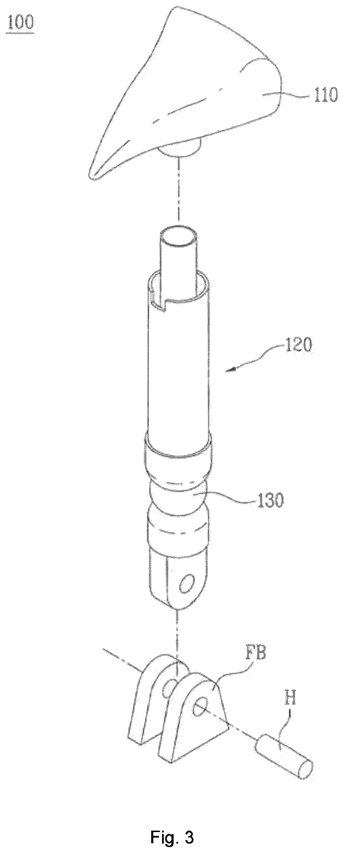

In FIG. 3, an impact absorbing device 100, which is separated from the electric kickboard, is disassembled into the seat 110, the seat frame 120, the moving bar 130, and the frame bracket FB. As illustrated in FIG. 3, the impact absorbing device 100 is formed by sequentially coupling the seat 110, the seat frame 120, the moving bar 130, and the frame bracket FB.

The seat frame 120, as a main component of the impact absorbing device 100, includes a seat bar 121 and a seat frame housing 124.

The seat frame 120 serves to absorb an impact force applied to the seat 110 by a spring built therein.

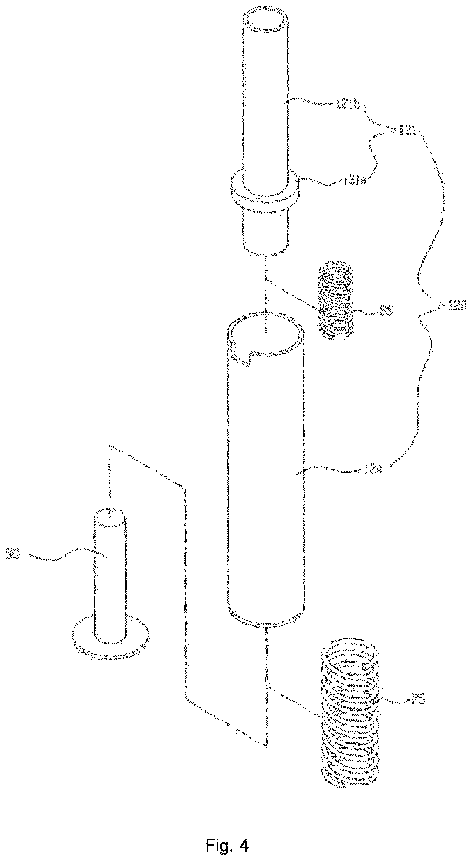

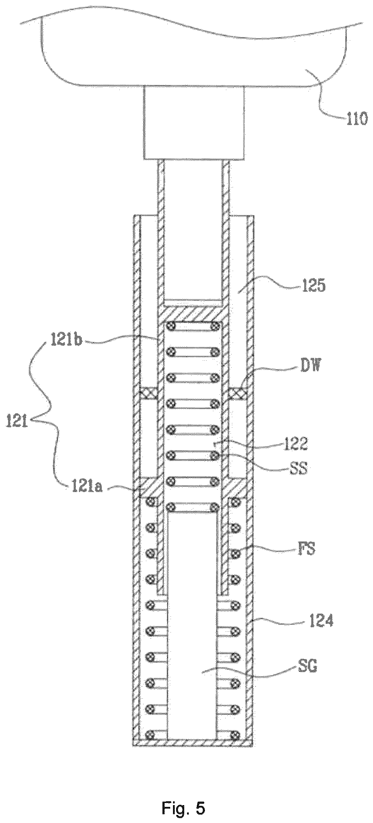

As illustrated in FIGS. 4 and 5, the seat frame housing 124 having an empty inner space is provided. The empty inner space is a seat bar mounting chamber 125.

The seat bar 121 and a spring guide SG are disposed in the seat bar mounting chamber 125. Here, the seat bar 121 is assembled to the seat frame housing 124, and the spring guide SG is formed at the moving bar 130. A partition wall DW is formed at an inner wall of the seat frame housing 124.

The seat bar 121 includes a seat bar body 121a and a seat bar support 121b. The seat bar body 121a has an opened hollow lower portion, and a spring mounting chamber 122 is formed in the hollow portion.

A first spring FS is installed in the seat bar mounting chamber 125. The first spring FS is installed to surround the spring guide SG. The first spring is disposed between a bottom of the seat frame housing 124 and a lower end of the seat bar to elastically support the seat bar 121.

The seat bar support 121b is integrated with the seat bar body 121a to move together with the seat bar body 121a when the seat bar body 121a ascends and descends. However, ascending of the seat bar body 121a is restricted as the seat bar body 121a is caught by the partition wall DW.

The first spring FS has a compression amount that is determined when a load is applied to the seat bar 121 according to a spring constant thereof. Since the spring constant decreases as a deflection increases when the same load is applied, a coil spring having a small spring constant is selected in order to sensitively react to load variation, and a coil spring having a great spring constant is selected in order to insensitively react to the load variation.

A second spring SS is installed in the spring mounting chamber 122. The second spring SS elastically supports the seat bar 121 such that an upper end thereof supports an upper end inner wall of the spring mounting chamber 122, and a lower end thereof is supported by an upper end of the spring guide SG.

A compressive force (impact force) applied to the seat bar 121 compresses the second spring SS mounted to the spring mounting chamber 122 as described above and the first spring FS mounted to surround the spring guide SG, and this impact force is absorbed as the first and second springs FS and SS react thereto. The compressive force applied to the seat bar 121 is absorbed by the elastic reaction force generated as described above.

Thus, since the compressive force applied to the seat bar 121 is distributed by the first spring FS and the second spring SS, when the same impact force is applied, a compression length decreases, and a restoration distance also decreases more than a case of using one spring. That is, the compressive force (impact force) may be further smoothly absorb while a vertical vibration decreases than the case of using one spring.

As the spring constant of the second spring SS is designed to be less than that of the first spring FS, when the load applied to the seat bar 121 is initiated, the second spring SS having the small spring constant firstly sensitively reacts to absorb the load, and when the load increases, the first spring FS and the second spring SS are compressed together to distribute the load and then restored.

Also, since the first spring FS and the second spring SS have different spring constants, the spring having a relatively slow reaction speed delays a reaction speed of the spring having a relatively fast reaction speed.

The seat 110 is coupled to an upper end of the seat bar support 121b.

The seat 110 has a shape suitable for supporting a weight of an electric kickboard user who sits on the seat while standing up. The seat 110 is used to be inserted between hips. The weight of the user is applied to the seat 110 through the hips, and then a compressive force is applied to the first spring FS and the second spring SS.

Hereinafter, an operation of the impact absorbing device 100 according to the present invention will be described.

As illustrated in FIGS. 1 to 5, when the user steps on the deck FH installed at both sides of the wheel frame WF, the impact absorbing device 100 fixed at an upper end of the wheel frame WF is inserted between hips and both legs of the user, and the weight of the user is supported by the seat 110, a portion of the weight is loaded to the deck, and the rest of the weight is loaded to the seat 110 formed at the upper end of the impact absorbing device 100.

Here, the seat 110 supports the weight of the user, and although a degree of supporting is varied according to elasticity of the spring, the load applied to a waist or a knee of the user is reduced as much as the elasticity.

Since the weight of the user is loaded only to the deck when the impact absorbing device 100 is not mounted to the wheel frame WF, the weight is concentrated to the knee or the waist. However, when the impact absorbing device 100 is formed, the weight of the user is loaded to the seat 110 formed at the upper end of the impact absorbing device 100, and the loaded weight is distributed by the seat 110.

When the electric kickboard is driven in a state in which the weight is distributed to the deck and the seat 110, the wheel WH rotates and moves forward
When the electric kickboard moves forward, the load applied to the seat 110 that supports a portion of the weight is varied by change of a road surface on which the wheel runs, speed change and direction change of the wheel, and shaking of the user standing on the deck. That is, the load applied to the seat 110 is varied many times for a short time less than 1 second. Since the variation of the load applied to the seat may be generated several tens of times even during one second, the seat 110 is shaken left and right directions or vibrated in a vertical direction when the wheel runs.

Since the wheel WH moves forward, an impact force caused by a slight height difference on the road surface or foreign substances existing on the road surface is directly transmitted to the seat 110. Thus, when the wheel runs, the seat momentarily moves in the vertical direction to be vibrated while the wheel runs.

When the impact force is not absorbed when the seat 110 is vibrated in the vertical direction, the impact force transmitted to the seat is directly transmitted to the hips of the user, and since the impact force transmitted to the hips is directly transmitted again to the knees, waist, neck, and head of the user, the user receive the physical impact as much.

That is, when the strong impact force transmitted to the seat 110 is not absorbed, the user may be hurt and receive a stress due to repeated strong impacts to feel a sense of fatigue.

However, since the seat 110 smoothly absorbs the impact force, the physical impact applied to the user may be relieved, and the stress may be prevented.

Hereinafter, a process of absorbing the impact force applied to the seat 110 while the wheel is driven will be described. The impact force applied to the wheel WH is transmitted to the seat 110 through the wheel frame WF, the frame bracket FB, the moving bar 130, and the seat bar 121.

When the wheel WH meets a descending stepped portion while passing a road surface, the entire electric kickboard moves down, but the human body on the seat 110 momentarily floats and is dropped with an accelerating force due to the gravity to apply greater load to the seat than that before passing the stepped portion.

When the great load is applied to the seat, as the seat bar 121 is pressed, the first spring FS is compressed, and the second spring SS is simultaneously compressed to momentarily absorb the load.

Since the moving bar 130 may be restored by moving by 0° to 10° in all radial directions due to flexibility thereof, when eccentricity is generated when the direction or speed of the electric kickboard is changed, the moving bar 130 is restored by elastically moving in the radial direction to allow smooth riding.

As described above, when the impact force arrives at the seat 110 as the wheel WH moves forward, the impact is absorbed as the seat bar 121 simultaneously compresses the first spring FS and the second spring SS.

Thus, since riding in a state in which the weight is loaded to the seat while standing up is possible, riding the electric kickboard is not difficult even for a long time riding, and the impact force applied to the knees, the waist, or the neck is remarkably reduced to allow comfortable riding.

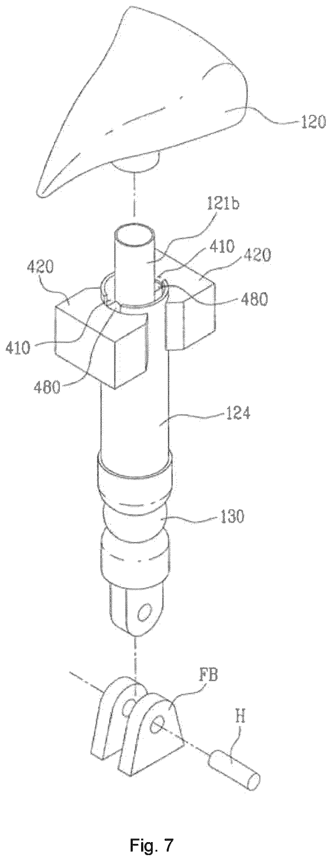

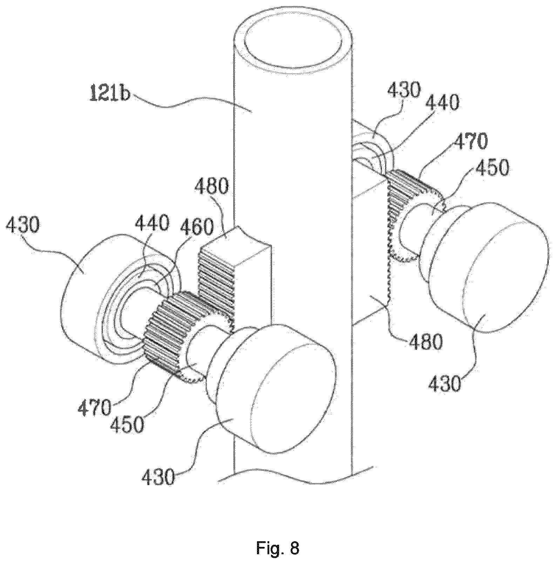

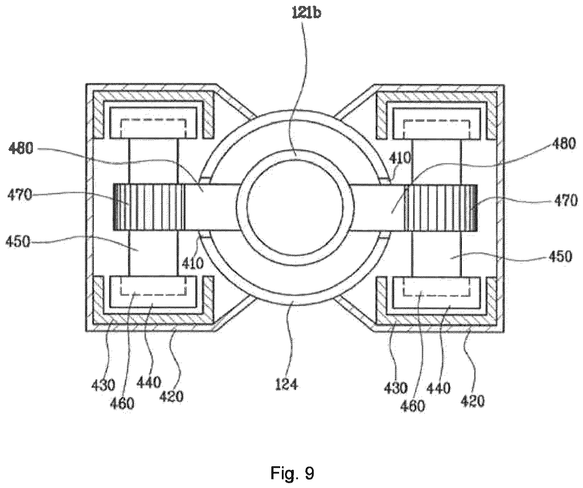

FIGS. 7, 8, and 9 are views illustrating a state in which a self-power generating device using a weight of a user is installed on a seat frame housing 124 according to the present invention.

One pair of rack moving grooves 410, which face each other, are opened in a longitudinal direction at upper end both sides of the seat frame housing 124. Stator bodies 420 are coupled to an outer surface of the seat frame housing 124 so as to be disposed at central portions of the rack moving grooves 410 Each of the stator bodies 420 has a rounded inner surface so as to closely attach the cylindrical seat frame housing 124, and a stator 430 around which a coil is wound is formed at each of inner both sides of each of the stator bodies 420.

Rotators 440 are rotatably installed to the stators 430, respectively, and the rotators 440 are coupled with each other in an integrated manner by a rotation shaft 450.

An one-way gear 460 transmitting a load only when rotates in a forward direction and rotating idly when rotates in a reverse direction is formed between the rotation shaft 450 and the rotator 440.

A pinion gear 470 is formed at a central portion of the rotation shaft 450, and a rack gear 480 engaged with the pinion gear 470 is formed at each of both side surfaces of a seat bar support 121b.

The self-power generating device is electrically connected with a built-in battery to supply and accumulate generated electricity to the battery.

The seat bar support 121b is vertically vibrated when the user of the electric kickboard operates the electric kickboard to move in a state in which the user sits on the seat 110 while standing up, and a pressing force is repeatedly applied in proportion to the load of the user whenever vibrated because the weight is loaded to the seat 110.

When the seat bar support 121b descends, the pinion gear 470 engaged with the rack gear 480 formed at the seat bar support 121b rotates. When the pinion gear 470 rotates, the rotator 440 rotates through the rotation shaft 450, and since the rotator 440 rotates in the stator 430, electricity is generated by electromagnetic induction.

When the seat bar support 121b ascends, the pinion gear 470 engaged with the rack gear 480 reversely rotates. When the pinion gear 470 reversely rotates, a load is not loaded to the rotator 450 because the pinion gear 470 rotates idly by the one-way gear 460 disposed between the rotation shaft 450 and the rotator 440. As described above, the rotator 440 rotates to produce electricity only when the seat bar support 121b descends.

The generated electricity is supplied to the battery built in the electric kickboard to be used or accumulated. As described above, since the electricity is produced and accumulated by the self-power generating device, a driving distance of the electric kickboard remarkably increases further than a case of using only the battery built in the electric kickboard.

According to the present invention, the impact absorbing device capable of supporting the weight of the user who stands up is installed to appropriately absorb the impact applied to the knee or the waist of the user while riding the electric kickboard, and the seat elastically absorbs shakings or vibrations generated when the electric kickboard is driven to support the weight of the user, thereby remarkably reducing the impact applied to the user through the seat.

Also, since the self-power generating device is mounted, electricity may be continuously produced during riding, and the produced electricity may be supplied to and accumulated in the battery built tin the electric kickboard.

Although the embodiments of the present invention have been described, it is understood that the present invention should not be limited to these embodiments but various changes and modifications can be made by one ordinary skilled in the art within the scope of the present invention as hereinafter claimed.

## Claims

1. An electric kickboard comprising a self-power generating device to support a weight of a user standing up, comprising:
a wheel frame (WF) to which an electrically driven wheel (WH) is mounted;
a frame bracket (FB) coupled onto a deck (FH) that is coupled onto the wheel frame;
a moving bar (130) that is coupled to an upper end of the frame bracket, bent in a radial direction when an external force is applied and then restored, and comprises a spring guide (SG) vertically formed at a central portion thereof;
a seat frame housing (124) that is detachably coupled to the moving bar and hollow in a longitudinal direction thereof so that a seat bar mounting chamber (125) is formed therein;
a seat bar (121) comprising a seat bar body (121a) and a seat bar support (121b), wherein the seat bar body (121a) is inserted to the seat bar mounting chamber (125) to vertically vibrate according to load variation caused by movement in the seat bar mounting chamber, and the seat bar support (121b) protrudes to the outside of the seat bar mounting chamber (125);
a first spring (FS) inserted between the moving bar (130) and the seat bar (121) to elastically support the seat bar (121) while surrounding the spring guide (SG);
a second spring (SS) inserted between the seat bar (121) and an upper end of the spring guide (SG) to elastically support the seat bar (121) and having a spring constant different from that of the first spring;
a seat (110) coupled to an upper end of the seat bar support (121b);
a rack moving groove (410) formed at each of both sides of the seat frame housing (124);
a stator body (420) that is disposed at a central portion of the rack moving groove (410), coupled to each of the both sides of the seat frame housing (124), and comprises one pair of stators (430) therein;
a rotator (440) rotatably installed to each of the stators (430) to generate electricity by electromagnetic induction;
a rotation shaft (450) configured to connect the rotators with each other in an integrated manner;
an one-way gear (460) disposed between the rotation shaft (450) and the rotator (440) to transmit a load only when the rotation shaft (450) rotates in a forward direction and rotate idly when the rotation shaft (450) rotates in a reverse direction;
a pinion gear (470) disposed at a central portion of the rotation shaft (450); and
a rack gear (480) disposed at each of both sides of the seat bar support (121b) so as to be engaged with the pinion gear (470).

## Patentansprüche

1. Elektrischer Tretroller, der eine Vorrichtung zur Selbststromerzeugung aufweist und das Gewicht eines stehenden Anwenders trägt, wobei der Tretroller folgendes aufweist:
einen Radrahmen (WF), an dem ein elektrisch angetriebenes Rad (WH) befestigt ist;
eine Strebe (FB), die mit einem Fahrgestell (FH) verbunden ist, das mit dem Radrahmen verbunden ist;
eine bewegliche Stange (130), die mit einem oberen Ende der Strebe des Rahmens verbunden ist, die sich in radialer Richtung biegt, wenn eine externe Kraft angewendet wird, und die sich anschließend wieder zurückstellt, und die eine Federführung (SG) aufweist, die vertikal an einem zentralen Abschnitt davon ausgebildet ist;
ein Sitzrahmengehäuse (124), das lösbar mit der beweglichen Stange verbunden ist und in Längsrichtung hohl ist, so dass darin eine Kammer (125) zum Befestigen der Sitzstange ausgebildet ist;
eine Sitzstange (121), die folgendes aufweist: einen Sitzstangenkörper (121a) und eine Sitzstangenstütze (121b), wobei der Sitzstangenkörper (121a) in die Kammer (125) zum Befestigen der Sitzstange eingeschoben ist, um entsprechend der durch die Bewegung in der Kammer (125) zum Befestigen der Sitzstange verursachten Laständerung vertikal zu schwingen, und wobei sich die Sitzstangenstütze (121b) von der Kammer (125) zum Befestigen der Sitzstange nach außen erstreckt;
eine erste Feder (FS), die zwischen der beweglichen Stange (130) und der Sitzstange (121) eingeschoben ist, um die Sitzstange (121) elastisch zu tragen, während sie die Federführung (SG) umgibt;
eine zweite Feder (SS), die zwischen der Sitzstange (121) und einem oberen Ende der Federführung (SG) eingeschoben ist, um die Sitzstange (121) elastisch zu tragen, wobei die Federkonstante unterschiedlich zu der der ersten Feder ausgebildet ist;
einen Sitz (110), der mit einem oberen Ende der Sitzstangenstütze (121b) verbunden ist;
eine Nut (410) zum Bewegen eines Rahmens, die an jeder der beiden Seiten des Sitzrahmengehäuses (124) ausgebildet ist;
einen Statorkörper (420), der an einem zentralen Abschnitt der Nut (410) zum Bewegen des Rahmens angeordnet und mit jeder der beiden Seiten des Sitzrahmengehäuses (124) verbunden ist sowie ein Paar Statoren (430) darin aufweist;
einen Rotor (440), der schwenkbar an jedem Stator (430) angeordnet ist, um durch elektromagnetische Induktion Elektrizität zu erzeugen;
eine Drehwelle (450), die derart ausgebildet ist, dass sie die Rotoren einstückig miteinander verbindet;
ein Freilaufgetriebe (460), das zwischen der Drehwelle (450) und dem Rotor (440) angeordnet ist, um eine Last lediglich zu übertragen, wenn sich die Drehwelle (450) in Vorwärtsrichtung dreht, und sich frei dreht, wenn sich die Drehwelle (450) in Rückwärtsrichtung dreht;
ein Ritzel (470), das an einem zentralen Abschnitt der Drehwelle (450) angeordnet ist; und
ein Zahnstangengetriebe (480), das an jeder der beiden Seiten der Sitzstangenstütze (121b) der Sitzstange derart angeordnet ist, dass es mit dem Ritzel (470) in Eingriff steht.

## Revendications

1. Trottinette électrique comprenant un dispositif générant sa propre énergie pour supporter le poids d'un utilisateur debout, comprenant :
un châssis de roue (WF) sur lequel est montée une roue à entraînement électrique (WH) ;
un support de châssis (FB) couplé à une plate-forme (FH) qui est couplée au châssis de roue ;
une barre mobile (130) qui est couplée à une extrémité supérieure du support de châssis, pliée dans une direction radiale lorsqu'une force externe est appliquée puis restaurée, et qui comprend un guide de ressort (SG) formé verticalement dans sa partie centrale ;
un logement de châssis de siège (124) qui est couplé de manière amovible à la barre mobile et creux dans sa direction longitudinale de manière à former à l'intérieur une chambre de montage de barre de siège (125) ;
une barre de siège (121) comprenant un corps de barre de siège (121a) et un support de barre de siège (121b), dans lequel le corps de barre de siège (121a) est inséré dans la chambre de montage de barre de siège (125) pour vibrer verticalement en fonction de la variation de charge causée par le mouvement dans la chambre de montage de barre de siège, et le support de barre de siège (121b) fait saillie à l'extérieur de la chambre de montage de barre de siège (125) ;
un premier ressort (FS) inséré entre la barre mobile (130) et la barre de siège (121) pour soutenir élastiquement la barre de siège (121) tout en entourant le guide de ressort (SG) ;
un second ressort (SS) inséré entre la barre de siège (121) et une extrémité supérieure du guide de ressort (SG) pour soutenir élastiquement la barre de siège (121) et ayant une constante de ressort différente de celle du premier ressort ;
un siège (110) couplé à une extrémité supérieure du support de barre de siège (121b) ;
une gorge de déplacement de crémaillère (410) formée sur chacun des deux côtés du logement de châssis du siège (124) ;
un corps de stator (420) qui est disposé dans une partie centrale de la gorge de déplacement de crémaillère (410), couplé à chacun des deux côtés du logement de châssis du siège (124), et qui comprend une paire de stators (430) à l'intérieur de celui-ci ;
un rotateur (440) installé de manière rotative sur chacun des stators (430) pour générer de l'électricité par induction électromagnétique ;
un arbre de rotation (450) configuré pour connecter les rotateurs l'un à l'autre de manière intégrée ;
un engrenage unidirectionnel (460) disposé entre l'arbre de rotation (450) et le rotateur (440) pour transmettre une charge uniquement lorsque l'arbre de rotation (450) tourne dans le sens avant et tourner à vide lorsque l'arbre de rotation (450) tourne dans le sens inverse ;
un pignon (470) disposé dans une partie centrale de l'arbre de rotation (450) ; et
une crémaillère (480) disposée de part et d'autre du support de barre de siège (121b) de manière à être en prise avec le pignon (470).
